# EUROPEAN PATENT SPECIFICATION

(11) **EP 3 364 724 B1**
(45) Date of publication and mention of the grant of the patent: **25.12.2019**
(21) Application number: 18157004.5
(22) Date of filing: 15.02.2018
(51) Int. Cl.: H05B 33/08, F21K 9/278

(54) **UNIVERSAL RETROFIT LED LIGHTING TUBE AND LIGHTING SYSTEM**
UNIVERSELLE NACHRÜSTBARE LED-LEUCHTSTOFFRÖHRE UND BELEUCHTUNGSSYSTEM
TUBE D'ÉCLAIRAGE À LED DE RESTAURATION UNIVERSELLE ET SYSTÈME D'ÉCLAIRAGE

(30) Priority: 17.02.2017 CN 201710085764
(43) Date of publication of application: 22.08.2018
(73) Proprietor: Ledvance GmbH, 85748 Garching bei München (DE)
(72) Inventor: DING, ShiYu, Shenzhen, Guangdong 518053 (CN); YANG, Xusheng, Shenzhen, Guangdong 518053 (CN)
(74) Representative: Schulz, Oliver Frank Michael

(56) References cited:
- WO-A1-2012/066822
- US-A1- 2015 008 836
- US-A1- 2015 181 661

## Description

The present invention relates to an LED lighting tube, in particular to an LED lighting T8 tube.

Fluorescent tube lamps have long been known as efficient lighting devices. Numerous buildings are currently equipped with luminaires adapted to receive fluorescent tube lamps.

Fluorescent tube lamps are, however, negative differential resistance devices. In other words, the more current flows through them, the more the electrical resistance of the fluorescent lamp drops. Connected directly to a constant-voltage power supply such as the mains powerline (also referred to as powerline, household power, wall power, line power, the grid etc.), a fluorescent lamp would rapidly self-destruct due to the uncontrolled current flow. To prevent this, fluorescent lamps typically employ an auxiliary device, a so-called ballast, to regulate the current flow through the lamp. Typically, either a conventional ballast (also referred to as a magnetic ballast or a conventional control gear, CCG) or an electronic control gear (ECG) is used.

Because of their even more energy-efficient function, there is a growing demand for retrofit LED tubes. Retrofit LED tubes are lighting devices employing highly efficient LEDs (light-emitting diodes) as light sources which are usable in existing luminaires in the same way as a fluorescent tube lamp would be used.

In US 6936968 B2, a retrofit light emitting diode tube with an elongated cylindrical transparent envelope, a base cap at each end of the envelope, and at least one LED device in electrical communication with the base cap is described.

Preferably, such retrofit LED tubes are universal LED tubes, meaning that they may be used with CCG luminaires, ECG luminaires and even with a luminaire that is adapted to connect the LED tube directly to the mains powerline. International standards like IEC 62776:2014, edition 1.0, published on 2014-12-11, make demands on the pin-safety. Pin-safety pertains e.g. to the fact that, if one side of an LED tube is inserted into a luminaire, external connecting pins on the other side of the LED tube are often accessible for the installer of the LED tube and might be carrying a harmful voltage.

US 2015/008836 A1 shows an LED fluorescent lamp driving device driven by being connected to lamp stabilizer and an LED fluorescent lamp having the driving device installed therein.

US 2015/181661 A1 shows a linear solid state lighting using a frequency sensing and control mechanism free of fire and shock hazards.

Typically, one of two solutions is employed for pin-safety: either a mechanical switcher is used which is switched manually by the installer after the installation of the tube lamp in the luminaire, or a relay circuit triggered by high frequency is used. For universal LED tubes, usually mechanical switchers are preferred.

Additionally, it is desirable that the retrofit LED tube has a hot plug-in capability which is present in many fluorescent lamps. Hot plug-in capability means that the tube may be installed in an ECG luminaire without having to power off the ECG first.

One object of the present invention is to provide an improved universal retrofit LED lighting tube, in particular a universal retrofit LED lighting tube with pin-safety and hot plug-in capability.

According to one aspect of the invention, an LED lighting tube is provided. The LED lighting tube comprises a first and a second set of external connecting pins for connecting the LED lighting tube to a luminaire. The LED lighting tube is advantageously usable with a luminaire adapted for connection to a mains electric power line, to a luminaire with a CCG, to a luminaire with an ECG and/or to various modified luminaires by the first and the second set of external connecting pins.

The LED lighting tube comprises a first circuit connected between the first set of external connecting pins and the second set of external connecting pins. Preferably, the first circuit is connected directly to the first set of external connecting pins.

In the foregoing and in the following, the word "connected" refers to an electric connection, i.e. a connection configured to transport electric signals between the connected elements, if the context does not explicitly state otherwise. The word "connected" may refer to a direct and/or to an indirect connection if the context does not explicitly state otherwise.

The first circuit is advantageously configured as a short-circuit for high frequencies. High frequencies (HF) can include, or consist of, frequencies of 1 kHz and higher, for example 10 kHz and higher, in particular of 20 kHz and higher, preferably between 20 kHz and 75 kHz.

The LED lighting tube further comprises a second circuit connected between the first circuit and the second set of external connecting pins. Preferably, the second circuit is connected directly to the second set of external connecting pins.

The second circuit may be configured as a short-circuit for low frequencies. Low frequencies can include, or consist of, frequencies of 100 Hz and lower, in particular of 50 Hz and/or 60 Hz or of another frequency value used in an AC mains powerline.

Between the first circuit and the second circuit, a control circuit is connected, which is electrically connected to the second circuit by a capacitance and by a relay controllable by the control circuit. The relay is according to the invention a type of electrically operated switch, in particular a relay circuit triggered by high frequencies. The control circuit preferably is also configured as an HF bridge rectifier.

A light engine is electrically connected between the first circuit and the control circuit. The light engine comprises one or more light-emitting diodes (LEDs) configured to emit light when supplied with a direct current.

The LED lighting tube according to the invention is advantageously a universal retrofit LED lighting tube, meaning that it may be used in a CCG luminaire, an ECG luminaire as well as in a luminaire directly connected to the mains powerline without any CCG or ECG, further providing pin-safety and a hot plug-in capability.

According to another aspect of the invention, a lighting system is provided, comprising an LED lighting tube according to the invention and a fuse connected between one pin of the first set of connecting pins and one pin of the second set of connecting pins. The fuse may be a High Rupture Capacity (HRC) fuse.

According to another aspect of the invention, a use of the LED lighting tube of the present invention with a CCG luminaire, with an ECG luminaire and/or directly with a mains powerline is provided. The use of the LED lighting tube may also be considered a method for using said LED lighting tube with a CCG luminaire, with an ECG luminaire and/or directly with a mains powerline.

According to yet another aspect of the invention, a method of mounting the LED lighting tube of the present invention in, or to, a CCG luminaire, an ECG luminaire and/or directly a mains powerline is provided.

According to the invention, the control circuit is directly connected to the second circuit by the relay and the capacitance and is otherwise galvanically decoupled and disconnected from the second circuit. In this way, pin-safety and a hot plug-in capability may be provided.

According to at least one embodiment, the second circuit comprises a first inductance connected to a first pin of the second set of connecting pins and a second inductance connected to a second pin of the second set of connecting pins. In this way, an effective yet comparatively simple second circuit is provided that acts both as a low frequency short-circuit and as a filament resistor in the case of the use of the LED lighting tube with an ECG luminaire. According to at least one embodiment, the first circuit is further configured as an EMI filter, thus improving the general efficiency of the LED lighting tube.

According to the invention, a PFC circuit or an AC-DC converter is connected between the first circuit and the light engine. The PFC circuit contributes to, or effects, a suppressing of harmonic currents. The PFC circuit is preferably a buck PFC converter and may thus function as an AC/DC converter, in particular in the case of operation of the LED lighting tube within a CCG luminaire or within a luminaire adapted for direct connection to the mains powerline. The AC-DC converter may regulate its output current (LED current) to be constant in CCG or mains operation.

According to at least one embodiment, the first circuit comprises a first inductance connected to a first pin of the first set of connecting pins and a second inductance connected to a second pin of the first set of connecting pins, and a resistor and a capacitance connected in parallel between a first line leading from the first pin to the PFC converter circuit and a second line leading from the second pin to the PFC converter circuit.

According to at least one embodiment, the first set of connecting pins, the first circuit, the PFC converter circuit, the light engine, the control circuit, the second circuit and the second set of connecting pins are arranged an electrically connected in this order in series within the LED lighting tube.

According to at least one embodiment, the control circuit is further configured as a high frequency bridge rectifier. The scope of the present invention is defined by the appendent claims. All embodiments which do not fall under the scope of the appendent claims are examples which are useful to understand the invention, but do not form part of the present invention.
Figures 1 to 3 show schematic illustrations of an LED lighting tube according to the present invention.
Figures 4 to 7 show schematic illustrations of lighting systems according to further embodiments of the present invention.

Elements that are identical, similar or have an identical or similar effect are provided with the same reference numerals in the figures. The figures and the size relationships of the elements illustrated in the figures among one another should not be regarded as to scale. Rather, individual elements may be illustrated with an exaggerated size to enable better illustration and/or better understanding.

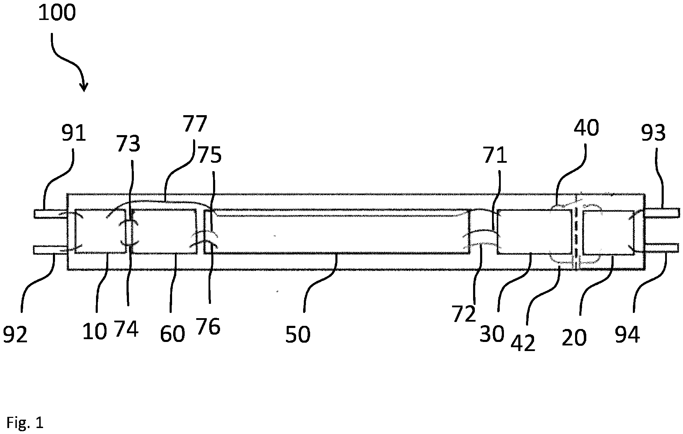

With reference to Fig. 1, a first embodiment of an LED lighting tube 100 is described on the basis of schematic illustrations.

The LED lighting tube 100 comprises a first set of external connecting pins 91, 92, comprising a first external connecting pin 91 and a second external connecting pin 92, arranged at one longitudinal end of the LED lighting tube 100. The LED lighting tube 100 also comprises a second set of external connecting pins 93, 94, comprising a third external connecting pin 93 and a fourth external connecting pin 94, arranged at the other longitudinal end of the LED lighting tube 100.

The first through fourth external connecting pins 91, 92, 93, 94 are provided for connecting the LED lighting tube 100 to different kinds of luminaires, desirably in the same way as a fluorescent lamp tube would be connected. A length of the LED lighting tube 100 may correspond to a standard length of a fluorescent lamp tube.

The LED lighting tube 100 further comprises a first circuit 10 electrically connected to the first set of external connecting pins 91, 92. The first circuit 10 is preferably directly connected to the first set of external connecting pins 91, 92.

The first circuit 10 is configured as a short-circuit for high frequencies. High frequencies can include, or consist of, frequencies of 1 kHz and higher, for example 10 kHz and higher, in particular of 20 kHz and higher, preferably between 20 kHz and 75 kHz. The first circuit 10 may additionally, or as an alternative, be formed as an electromagnetic interference (EMI) filter circuit.

One possible variant of the first circuit 10 is described with respect to Fig. 1 in the following. It should however be understood that the first circuit may be formed as a high frequency short-circuit (or "high frequency shorter") and/or as an EMI filter circuit in numerous ways known in the prior art.

The LED lighting tube 100 also comprises a second circuit 20 electrically connected to the second set of external connecting pins 93, 94. The second circuit 20 is formed as a short-circuit for low frequencies. The second circuit is preferably directly connected to the second set of external connecting pins 93, 94.

Low frequencies can include, or consist of, frequencies of 100 Hz and lower, in particular of 50 Hz and/or 60 Hz or of another frequency value used in an AC mains powerline.

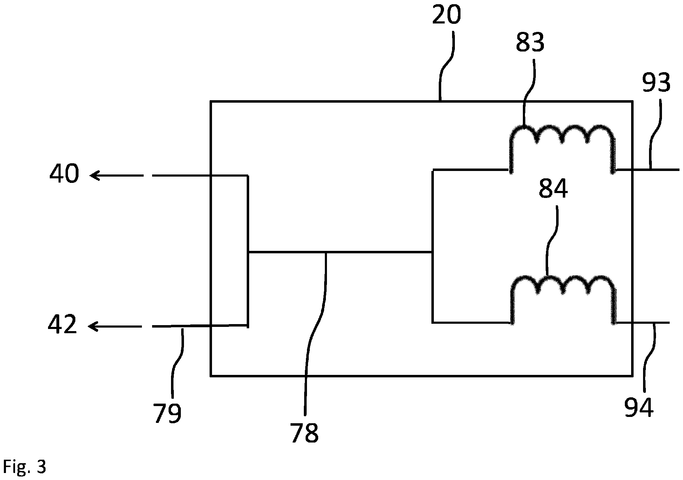

One possible variant of the second circuit 20 is described with respect to Fig. 3 in the following. It should however be understood that the second circuit may be formed as a low frequency short-circuit (or "low frequency shorter") in numerous ways known in the prior art.

The LED lighting tube 100 further comprises a control circuit 30 connected between the first circuit 10 and the second circuit 20. The control circuit 30 is connected to the second circuit 20 by a relay 40 controllable by the control circuit 30 and by a capacitance 42.

The control circuit 30 is configured such that the relay 40 is triggered by high frequencies so that pin-safety is achieved. Pin-safety in particular requires a basic insulation between the connection pins at one end of a tube and the connection pins on the other end of the tube at lower frequencies. For low frequencies, capacitance 42 and un-triggered relay 40 act as an insulator. The control circuit 30 is also configured as an HF bridge rectifier.

The capacitance is preferably formed as a capacitor, in particular as a Y-capacitor, preferably as a Y2 capacitor. Y capacitors are designed to filter out common-mode electrical noise that could otherwise flow back e.g. to the mains powerline.

The definition of Y-capacitors, and Y2 capacitors in particular, may be taken from one or more of the following standards:
- International Standard IEC 60384-14, 2^{nd} Edition, 1993;
- German industry standard DIN EN 60384-14:2014-04; VDE 0565-1-1:2014-04, released in April 2014, titled "Fixed capacitors for use in electronic equipment - Part 14: Sectional specification - Fixed capacitors for electromagnetic interference suppression and connection to the supply mains (IEC 60384-14:2013)";
- US-American standards UL 1414 for across the line applications and UL 1283 for EMI filters;
- Canadian standards CAN/CSA C22.2N°1 and CAN/CSA 384-14;
- Chinese standard GB/T14472

Y2 capacitors in particular may have 150 to 300 Vac ratings and a peak test voltage of 5 kV. The capacitance 42 may have a capacitance value of 1 nF or lower.

The relay 40 provides the LED lighting tube 100 with hot plug-in capability, ensuring that, in the case that the LED lighting tube 100 is used with an ECG luminaire, the ECG does not need to be powered off before installation of the LED lighting tube 100 in the ECG luminaire.

The relay 40 and the capacitance 42 may be connected to the second circuit 20 as shown in Fig. 3 in the following. Apart from the relay 40 and the capacitance 42, the control circuit 30 may be galvanically completely decoupled and disconnected from the second circuit 20.

The LED lighting tube 100 further comprises a light engine 50 connected between the first circuit 10 and the second circuit 20. As shown in Fig. 1, the light engine 50 may be directly connected to the second circuit 20 via a first lead 71 electrically contacting a negative pole, LED-, of the light engine 50 as well as by a second lead 72 electrically contacting a positive pole, LED+, of the light engine 50.

The LED lighting tube 100 includes one or more LED elements configured to emit light when supplied with an electric voltage between the negative pole, LED-, and the positive pole, LED+.

A buck PFC converter 60 is connected to the first circuit 10 by a third lead 73 and a fourth lead 74, and is further connected to the negative pole, LED-, of the LED lighting tube 100 by a fifth lead 75 and to the positive pole, LED+, of the LED lighting tube 100 by a sixth lead 76.

Between the first circuit 10 and the control circuit 30, an AC lead 77 for conducting AC current may be connected, as shown in Fig. 1. The AC lead 77 may be used in the case of operation of the LED lighting tube 100 with an ECG luminaire, for carrying the voltage to trigger the relay 40. The AC lead 77 may be connected to the third lead 73 or to the second lead 74 (or a respective node within the first circuit 10) on the one side, and to the control circuit 30 on the other side, in particular to the relay 40.

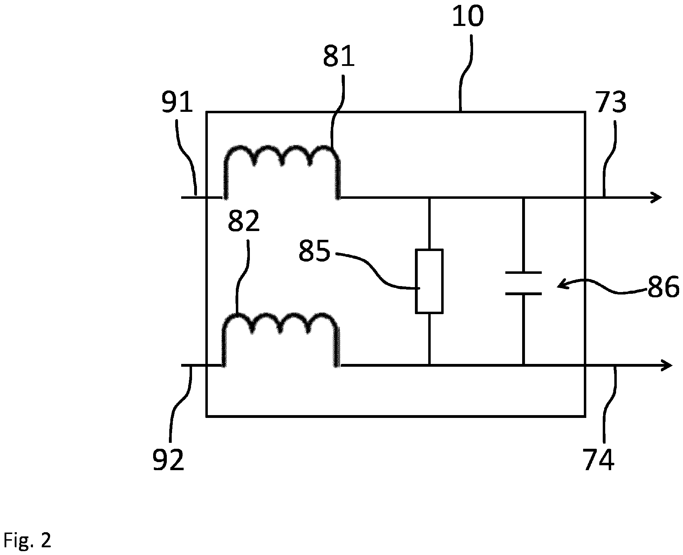

With reference to Fig. 2, a possible structure of the first circuit 10 is described on the basis of schematic illustrations. The first circuit 10 may be formed exactly as shown in Fig. 2. It should also be understood that Fig. 2 may be taken as schematic and that all elements therein may be exchanged with functional alternatives known in the prior art.

As shown in Fig. 2, a first inductance 81 such as an electromagnetic coil may be connected between the first external connecting pin 91 and the third lead 73, and a second inductance 82 such as an electromagnetic coil may be connected between the second external connecting pin 92 and the fourth lead 74. Between a first node connected between the first inductance 81 and the third lead 73 and a second node connected between the second inductance 82 and the fourth lead 74, a resistor element 85 and a capacitor element 86 are connected in parallel to each other. The first and the second inductance 81, 82, the resistor element 85 and the capacitor element 86 are desirably chosen with such respective magnitudes that the first circuit 10 acts as an EMI filter as well as an HF short-circuit.

With reference to Fig. 3, a possible structure of the second circuit 20 is described on the basis of schematic illustrations. The second circuit 20 may be formed exactly as shown in Fig. 3. It should also be understood that Fig. 3 may be taken as schematic and that all elements therein may be exchanged with functional alternatives known in the prior art.

Between an internal node 78 of the second circuit 20 and the third external connecting pin 93, a third inductance 83 such as an electromagnetic coil is connected. In addition, a fourth inductance 84 such as an electromagnetic coil is connected between said node 78 and the fourth external connecting pin 94. In this way, the second circuit 20 acts as a low frequency short-circuit, in particular a short-circuit for frequencies of 50 and/or 60 Hertz.

Also connected to said node 78 is a two-pronged leads fork 79, a first of the two branches of the fork 79 being electrically connected to the capacitance 42, and the other (second) of the two branches of the fork 79 being electrically connected to the relay 40 such that the electrical connection of the first branch of the fork 79 may be opened or closed by the relay 40. The third and the fourth inductance are desirably chosen with such respective magnitudes that the second circuit 20 acts as a filament resistor for an ECG in the case that the LED lighting tube 100 is installed in an ECG luminaire.

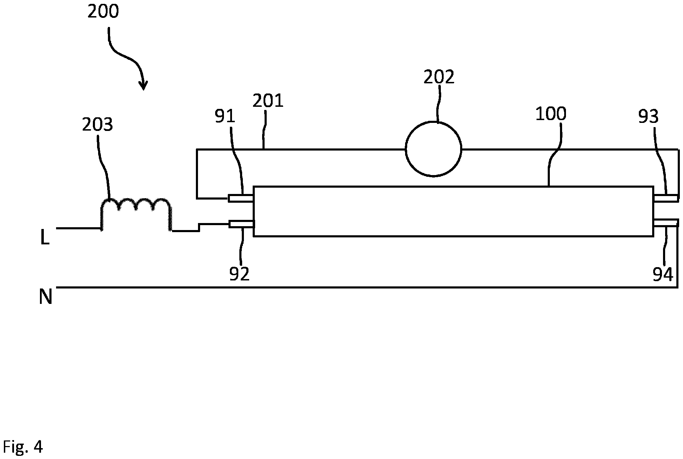

With reference to Fig. 4, a lighting system 200 according to another embodiment of the present invention is described. The lighting system 200 comprises the LED lighting tube 100 of Fig. 1, wherein the first external connecting pin 91 and the third external connecting pin 93 are connected to each other by an electrical lead 201 in which a fuse 202 is connected. The fuse 202 is preferably a High Rupture Capacity (HRC) fuse.

The lighting system 200 may further comprise a conventional control gear, CCG, 203, connected to the second external connecting pin 92, which may be connected to a mains powerline wire, e.g. a line wire L (also referred to as phase, hot, active or live wire). The fourth external connecting pin 94 may be connected to another mains powerline wire, e.g. the neutral wire N. The lighting system 200 may also comprise a CCG luminaire including the CCG 203.

From Fig. 4 it may be understood that the LED lighting tube 100 according to the present invention is useable in a CCG luminaire. Thus, also a use of the LED lighting tube 100 according to the present invention with a CCG luminaire as well as a method of mounting the LED lighting tube 100 in a CCG luminaire are disclosed.

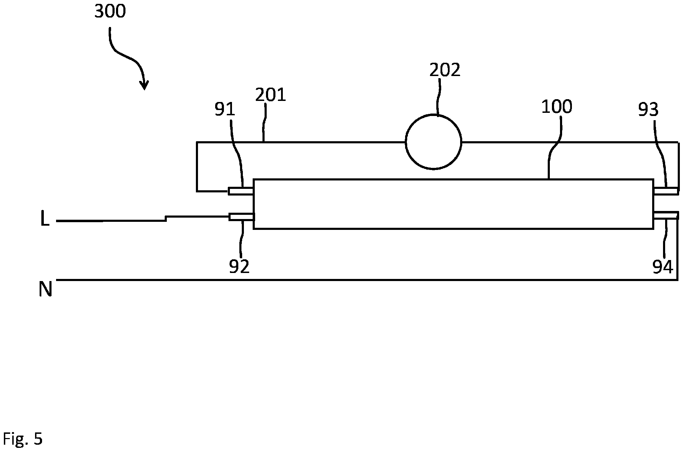

With reference to Fig. 5, a lighting system 300 according to still another embodiment of the present invention is described. The lighting system 300 is a variant of the lighting system 200, from which it differs in that the second external connecting pin 92 is directly connected to the mains powerline line wire L, without a CCG connected in between.

Fig. 5 serves to demonstrate that the LED lighting tube 100 according to the present invention may also be used in modified luminaires. Accordingly, also a use of the LED lighting tube 100 according to the present invention with a modified luminaire as well as a method of mounting the LED lighting tube 100 in a modified luminaire are disclosed.

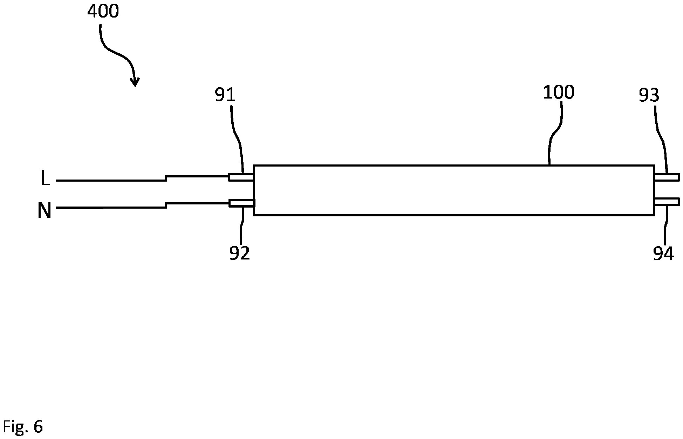

With reference to Fig. 6, a lighting system 400 according to yet another embodiment of the present invention is described. The lighting system 400 comprises the LED lighting tube 100 of Fig. 1, wherein the first external connecting pin 91 is directly connected to a first mains powerline wire, e.g. the line wire L, and wherein the second external connecting pin 92 is directly connected to a second mains powerline wire, e.g. the neutral wire N.

Fig. 6 serves to demonstrate that the LED lighting tube 100 according to the present invention may also be used directly with the mains powerline. Therefore, also a use of the LED lighting tube 100 according to the present invention directly with the mains powerline as well as a method of connecting the LED lighting tube 100 directly to the mains powerline are disclosed.

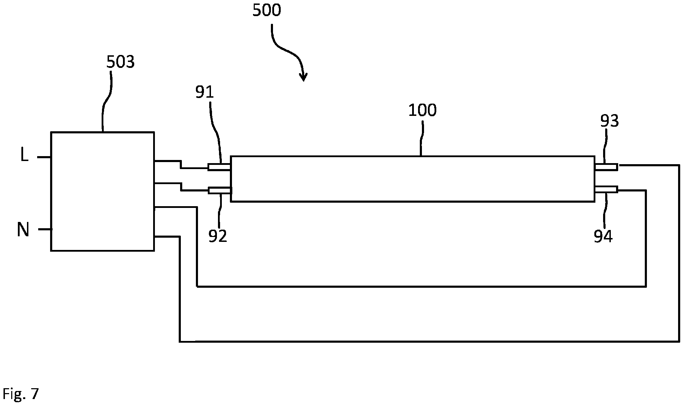

With reference to Fig. 7, a lighting system 500 according to yet another embodiment of the present invention is described. The lighting system 500 comprises the LED lighting tube 100 of Fig. 1 and an electronic control gear, ECG, 503 to which the first through fourth external connecting pins 91, 92, 93, 94 are electrically connected. The lighting system 500 may also comprise an ECG luminaire including the ECG 503.

Fig. 7 thus demonstrates that the LED lighting tube 100 according to the present invention may also be used with an ECG 503. Accordingly, also a use of the LED lighting tube 100 according to the present invention with, or within, an ECG luminaire as well as a method of mounting the LED lighting tube 100 in an ECG luminaire are disclosed.

### Reference Numerals

- 10: first circuit
- 20: second circuit
- 30: control circuit
- 40: relay
- 42: capacitance
- 50: light engine
- 60: PFC converter circuit 60
- 71: first lead
- 72: second lead
- 73: third lead
- 74: fourth lead
- 75: fifth lead
- 76: sixth lead
- 77: AC lead
- 78: node
- 79: leads fork
- 81: first inductance
- 82: second inductance
- 83: third inductance
- 84: fourth inductance
- 85: resistor element
- 86: capacitor element
- 91: first external connecting pin
- 92: second external connecting pin
- 93: third external connecting pin
- 94: fourth external connecting pin
- 100: LED lighting tube
- 200: lighting system
- 201: lead
- 202: fuse
- 203: CCG
- 300: lighting system
- 400: lighting system
- 500: lighting system
- 503: ECG

## Claims

1. An LED lighting tube (100), comprising:
a first and a second set of external connecting pins (91, 92, 93, 94) for connecting the LED lighting tube (100) to a luminaire;
a first circuit (10) connected between the first set of external connecting pins (91, 92) and the second set of external connecting pins (93, 94), the first circuit (20) being configured as a short-circuit for high frequencies;
a second circuit (20) connected between the first circuit (10) and the second set of external connecting pins (93, 94), the second circuit (20) being configured as a short-circuit for low frequencies;
a control circuit (30) connected between the first circuit (10) and the second circuit (20);
wherein the control circuit (30) is connected to the second circuit (20) by a relay (40) controllable by the control circuit (30) and by a capacitance (42), and triggered by high frequencies;
a light engine (50) connected between the first circuit (10) and the control circuit (30);and
a PFC circuit (60) for suppressing of harmonic currents or an AC-DC converter is connected between the first circuit (10) and the light engine (50),
**characterized in that**
the control circuit (30) is directly connected to the second circuit (20) by the relay (40) and the capacitance (42), and apart from the relay (40) and the capacitance (42) the control circuit (30) is galvanically completely decoupled and disconnected from the second circuit (20).

2. The LED lighting tube (100) according to claim 1,
wherein the second circuit (20) comprises a first inductance (21) connected to a first pin (93) of the second set of connecting pins (93, 94) and a second inductance (22) connected to a second pin (94) of the second set of connecting pins (93, 94).

3. The LED lighting tube (100) according to claim 1, wherein the first circuit (10) is further configured as an EMI filter.

4. The LED lighting tube (100) according to claim 1, wherein the first set of connecting pins (91, 92), the first circuit (10), the PFC converter circuit (60), the light engine (50), the control circuit (30), the second circuit (20) and the second set of connecting pins (93, 94) are arranged in this order in series within the LED lighting tube (100).

5. The LED lighting tube (100) according to claim 1, wherein the first circuit (10) comprises a first inductance (11) connected to a first pin (91) of the first set of connecting pins (91, 92) and a second inductance (12) connected to a second pin (92) of the first set of connecting pins (91, 92), and a resistor (13) and a capacitance (14) connected in parallel between a first line leading from the first pin (91)) to the PFC converter circuit (60) and a second line leading from the second pin (91) to the PFC converter circuit (60).

6. The LED lighting tube (100) according to claim 1, wherein the control circuit (30) is further configured as a high frequency bridge rectifier.

7. A lighting system (200; 300; 400; 500), comprising:
an LED lighting tube (100) according to claim 1; and
a fuse (202) connected between one pin of the first set of connecting pins (91, 92) and one pin of the second set of connecting pins (91, 92).

8. The lighting system (200) according to claim 7, wherein the fuse (110) is a High Rupture Capacity, HRC, fuse.

9. Use of the LED lighting tube (100) of claim 1 with a CCG luminaire, with an ECG luminaire and/or directly with a mains powerline.

## Patentansprüche

1. Eine LED-Beleuchtungsröhre (100), umfassend:
einen ersten und einen zweiten Satz externer Verbindungsstifte (91, 92, 93, 94) zum Verbinden der LED-Beleuchtungsröhre (100) mit einer Leuchte;
eine erste Schaltung (10), die zwischen dem ersten Satz externer Verbindungsstifte (91, 92) und dem zweiten Satz externer Verbindungsstifte (93, 94) verbunden ist, wobei die erste Schaltung (20) als Kurzschluss für Hochfrequenzen konfiguriert ist;
eine zweite Schaltung (20), die zwischen der ersten Schaltung (10) und dem zweiten Satz externer Verbindungsstifte (93, 94) geschaltet ist, wobei die zweite Schaltung (20) als Kurzschluss für niedrige Frequenzen konfiguriert ist;
eine Steuerschaltung (30), die zwischen der ersten Schaltung (10) und der zweiten Schaltung (20) verbunden ist;
wobei die Steuerschaltung (30) mit der zweiten Schaltung (20) durch ein Relais (40) verbunden ist, das durch die Steuerschaltung (30) und durch eine Kapazität (42) steuerbar und durch hohe Frequenzen ausgelöst ist;
eine Light Engine (50), die zwischen der ersten Schaltung (10) und der Steuerschaltung (30) verbunden ist; und
eine PFC-Schaltung (60) zum Unterdrücken von Oberschwingungsströmen oder ein AC-DC-Wandler, der zwischen der ersten Schaltung (10) und der Light Engine (50) geschaltet ist,
**dadurch gekennzeichnet, dass**
die Steuerschaltung (30) durch das Relais (40) und die Kapazität (42) direkt mit der zweiten Schaltung (20) verbunden ist, und abgesehen von dem Relais (40) und der Kapazität (42) ist die Steuerschaltung (30) von der zweiten Schaltung (20) galvanisch vollständig entkoppelt und getrennt.

2. Die LED-Beleuchtungsröhre (100) nach Anspruch 1,
wobei die zweite Schaltung (20) eine erste Induktivität (21) umfasst, die mit einem ersten Stift (93) des zweiten Satzes von Verbindungspins (93, 94) verbunden ist, und eine zweite Induktivität (22), die mit einem zweiten Stift (94) des zweiten Satzes von Verbindungspins (93, 94) verbunden ist.

3. Die LED-Beleuchtungsröhre (100) nach Anspruch 1, wobei die erste Schaltung (10) weiterhin als EMV-Filter konfiguriert ist.

4. Die LED-Beleuchtungsröhre (100) nach Anspruch 1, wobei der erste Satz von Verbindungsstiften (91, 92), die erste Schaltung (10), die PFC-Konverterschaltung (60), die Light Engine (50), die Steuerschaltung (30), die zweite Schaltung (20) und der zweite Satz von Verbindungsstiften (93, 94) in dieser Reihenfolge in Reihe innerhalb der LED-Beleuchtungsröhre (100) angeordnet sind.

5. Die LED-Beleuchtungsröhre (100) nach Anspruch 1, wobei die erste Schaltung (10) eine erste Induktivität (11) umfasst, die mit einem ersten Stift (91) des ersten Satzes von Verbindungspins (91, 92) verbunden ist, und eine zweite Induktivität (12), die mit einem zweiten Stift (92) des ersten Satzes von Verbindungspins (91, 92) verbunden ist, und einen Widerstand (13) und eine Kapazität (14), die parallel zwischen einer ersten Leitung, die vom ersten Stift (91) zur PFC-Konverterschaltung (60) führt, und einer zweiten Leitung, die vom zweiten Stift (91) zur PFC-Konverterschaltung (60) führt, geschaltet sind.

6. Die LED-Beleuchtungsröhre (100) nach Anspruch 1, wobei die Steuerschaltung (30) ferner als Hochfrequenz-Brückengleichrichter konfiguriert ist.

7. Ein Beleuchtungssystem (200; 300; 400; 500), umfassend:
eine LED-Beleuchtungsröhre (100) nach Anspruch 1; und
eine Sicherung (202), die zwischen einem Stift des ersten Satzes von Verbindungsstiften (91, 92) und einem Stift des zweiten Satzes von Verbindungsstiften (91, 92) verbunden ist.

8. Das Beleuchtungssystem (200) nach Anspruch 7, wobei die Sicherung (110) eine Sicherung mit hohem Schaltvermögen, HRC, ist.

9. Verwendung der LED-Beleuchtungsröhre (100) nach Anspruch 1 mit einer CCG-Leuchte, mit einer ECG-Leuchte und/oder direkt mit einer Stromnetzleitung.

## Revendications

1. Tube d'éclairage à LED (100), comprenant :
un premier et un deuxième jeu de broches de connexion externes (91, 92, 93, 94) pour connecter le tube d'éclairage LED (100) à un luminaire ;
un premier circuit (10) connecté entre le premier jeu de broches de connexion externes (91, 92) et le second jeu de broches de connexion externes (93, 94), le premier circuit (20) étant configuré comme un court-circuit pour les hautes fréquences ;
un second circuit (20) connecté entre le premier circuit (10) et le second jeu de broches de connexion externes (93, 94), le second circuit (20) étant configuré comme un court-circuit pour basses fréquences ;
un circuit de commande (30) connecté entre le premier circuit (10) et le second circuit (20) ;
dans lequel le circuit de commande (30) est connecté au second circuit (20) par un relais (40) pouvant être commandé par le circuit de commande (30) et par une capacité (42), et déclenché par des hautes fréquences ;
un générateur d'éclairage (50) connecté entre le premier circuit (10) et le circuit de commande (30);et
un circuit PFC (60) pour supprimer des courants harmoniques ou un convertisseur AC-DC est connecté entre le premier circuit (10) et le moteur léger (50),
**caractérisé en ce que**
le circuit de commande (30) est directement relié au second circuit (20) par le relais (40) et la capacité (42), et en dehors du relais (40) et de la capacité (42), le circuit de commande (30) est complètement découplé galvaniquement et déconnecté du second circuit (20).

2. Le tube d'éclairage LED (100) selon la revendication 1,
dans lequel le second circuit (20) comprend une première inductance (21) connectée à une première broche (93) du second jeu de broches de connexion (93, 94) et une seconde inductance (22) connectée à une seconde broche (94) du second jeu de broches de connexion (93, 94).

3. Le Tube d'éclairage LED (100) selon la revendication 1, le premier circuit (10) étant en outre configuré comme filtre EMI.

4. Le Tube d'éclairage à LED (100) selon la revendication 1, dans lequel le premier jeu de broches de connexion (91, 92), le premier circuit (10), le circuit convertisseur PFC (60), le générateur d'éclairage (50), le circuit de commande (30), le second circuit (20) et le second jeu de broches de connexion (93, 94) sont disposés en série dans cet ordre dans le tube d'éclairage à LED (100).

5. Le Tube d'éclairage à LED (100) selon la revendication 1, dans lequel le premier circuit (10) comprend une première inductance (11) connectée à une première broche (91) du premier jeu de broches de connexion (91, 92) et une seconde inductance (12) connectée à une seconde broche (92) du premier jeu de broches de connexion (91, 92), et une résistance (13) et une capacité (14) connectées en parallèle entre une première ligne allant de la première broche (91) au circuit convertisseur PFC (60) et une seconde ligne allant de la seconde broche (91) au circuit convertisseur PFC (60).

6. Le Tube d'éclairage à LED (100) selon la revendication 1, dans lequel le circuit de commande (30) est en outre configuré comme un redresseur en pont à haute fréquence.

7. Un Système d'éclairage (200 ; 300 ; 400 ; 500),
comprenant:
un tube d'éclairage à LED (100) selon la revendication 1 ; et
un fusible (202) connecté entre une broche du premier jeu de broches de connexion (91, 92) et une broche du deuxième jeu de broches de connexion (91, 92).

8. Le Système d'éclairage (200) selon la revendication 7, dans lequel le fusible (110) est un fusible à puissance de coupure élevée, HRC.

9. Utilisation du tube d'éclairage à LED (100) selon la revendication 1 avec un luminaire CCG, avec un luminaire ECG et/ou directement avec une ligne d'alimentation éléctrique.
